# EUROPEAN PATENT SPECIFICATION

(11) **EP 3 220 651 B1**
(45) Date of publication and mention of the grant of the patent: **18.03.2020**
(21) Application number: 16200957.5
(22) Date of filing: 28.11.2016
(51) Int. Cl.: H04N 21/4223, H04N 21/414, H04N 21/2187, G02B 27/01

(54) **LIVE VIDEO BROADCASTING METHOD AND DEVICE**
LIVE-VIDEO-RUNDFUNKVERFAHREN UND -VORRICHTUNG
PROCÉDÉ ET DISPOSITIF DE DIFFUSION VIDÉO EN DIRECT

(30) Priority: 16.03.2016 CN 201610150798
(43) Date of publication of application: 20.09.2017
(73) Proprietor: Beijing Xiaomi Mobile Software Co., Ltd., Beijing 100085 (CN)
(72) Inventor: SHANG, Jin, BEIJING, 100085 (CN); LI, Zhigang, BEIJING, 100085 (CN); ZHANG, Youzhi, BEIJING, 100085 (CN)
(74) Representative: Cabinet Beau de Loménie

(56) References cited:
- DE-U1-202009 010 719
- US-A1- 2013 002 813
- US-A1- 2013 083 173
- US-B1- 9 223 136

## Description

### TECHNICAL FIELD

The present disclosure generally relates to communications technology, and more particularly, to a live video broadcasting method and device.

### BACKGROUND

With the coming of the information age, we media emerges. Everyone may become an information disseminator, and people send information to information receivers in various dissemination forms, wherein the dissemination forms include: written dissemination, picture dissemination, audio dissemination, video dissemination or the like. Compared with the other dissemination forms, video dissemination may disseminate information more vividly to make the information receivers feel immersive, and thus video dissemination is well accepted by people.

A convenient and efficient manner for video dissemination is live video broadcasting, and people may utilize personal computers, mobile terminals or the like for live video broadcasting. Under general conditions, people utilize mobile terminals for live video broadcasting when being located outdoors or moving by virtue of mobility and portability of the mobile terminals, so that how to improve convenience for live video broadcasting becomes a problem urgent to be solved.

Document US 2013/002813 discloses techniques for viewing windows for video streams.

### SUMMARY

Accordingly, the present disclosure provides a live video broadcasting method and device.

According to a first aspect, the invention relates to a live video broadcasting method, which is applied to a mobile terminal and comprises that:
image information sent by smart glasses is received, the image information being acquired by an image acquisition element arranged on the smart glasses;
video information is synthesized according to audio information and the image information; and
the video information is sent to a video playing terminal.

By means of the technical solution, when the user of the mobile terminal moves or when the user of the mobile terminal stops at a specific site, the user of the mobile terminal may conveniently and rapidly provide live video broadcasting for the user of the video playing terminal to share video information of an environment where the user of the mobile terminal is located.

According to a particular embodiment, before the step that the video information is synthesized according to the audio information and the image information, the method may further include that:
the audio information received from the smart glasses, the audio information being acquired by an audio acquisition element connected with the smart glasses; or
the audio information is directly acquired by the mobile terminal.

According to the invention, the method further comprises that:
it is determined whether the audio information includes specific audio information matched with a preset control instruction or not, the preset control instruction including at least one of a first preset control instruction and a second preset control instruction, the first preset control instruction being configured to control a working state of the image acquisition element or an audio acquisition element and the second preset control instruction being configured to control a transmission state of the video information; and
when the audio information includes the specific audio information, the preset control instruction is executed, wherein the step of synthesizing comprises synthesizing the video information from the image information and audio information except the special audio information.

According to a particular embodiment, the method may further include that:
a communication connection is established with wearable equipment, the wearable equipment having a display function; and
information sent by the video playing terminal is received, and the information is sent to the wearable equipment for the wearable equipment to display the information.

According to a particular embodiment, the method may further include that:
a communication connection is established with wearable equipment, a preset number of control keys being arranged on the wearable equipment and different operations over the same key in the preset number of control keys corresponding to different preset control instructions, wherein the preset control instructions may include at least one of the first preset control instruction and the second preset control instruction, the first preset control instruction may be configured to control the working state of the image acquisition element or the audio acquisition element and the second preset control instruction may be configured to control the transmission state of the video information; and
when target operation over a target key in the preset number of control keys is detected, a control instruction corresponding to the target operation over the target key is executed.

According to a particular embodiment, the method may further include that:
a communication connection is established with a headset; and
the information sent by the video playing terminal is received, and voice information corresponding to the information is sent to the headset for the headset to output the voice information.

According to a particular embodiment, the method may further include that:
a communication connection is established with wearable equipment, a preset number of control keys being arranged on the wearable equipment and different operations over the same key in the preset number of control keys corresponding to different preset control instructions, wherein the preset control instructions may be configured to control a transmission state of the voice information; and
when target operation over a target key in the preset number of control keys is detected, a control instruction corresponding to the target operation over the target key is executed.

According to a particular embodiment, after the step that the information sent by the video playing terminal is received, the method may further include that:
it is determined whether the audio information includes specific audio information matched with a preset control instruction or not, the preset control instruction being configured to control the transmission state of the voice information; and
when the audio information includes the specific audio information, the preset control instruction is executed.

According to a second aspect, the invention relates to a live video broadcasting device is provided, which is configured in a mobile terminal and comprises:
a first receiving module, configured to receive image information sent by smart glasses, the image information being acquired by an image acquisition element arranged on the smart glasses;
a synthesis module, configured to synthesize video information according to audio information and the image information; and
a first sending module, configured to send the video information to a video playing terminal.

The advantages and technical effects of the device according to the invention correspond to those of the method presented above.

According to a particular embodiment, the device may further include:
a second receiving module and/or an acquisition module;
the second receiving module may be configured to receive the audio information sent by the smart glasses, the audio information being acquired by an audio acquisition element connected with the smart glasses; and
the acquisition module may be configured to acquire the audio information acquired by a mobile terminal.

According to the invention, the device further comprises:
a first determination module, configured to determine whether the audio information includes specific audio information matched with a preset control instruction or not, the preset control instruction including at least one of a first preset control instruction and a second preset control instruction, the first preset control instruction being configured to control a working state of the image acquisition element or an audio acquisition element and the second preset control instruction being configured to control a transmission state of the video information; and
a first instruction execution module, configured to, when the audio information includes the specific audio information, execute the preset control instruction, wherein the synthesis module is further configured to synthesize the video information from the image information and audio information except the special audio information.

According to a particular embodiment, the device may further include:
a first establishment module, configured to establish a communication connection with wearable equipment, the wearable equipment having a display function; and
a first transceiver module, configured to receive information sent by the video playing terminal, and send the information to the wearable equipment for the wearable equipment to display the information.

According to a particular embodiment, the device may further include:
a second establishment module, configured to establish a communication connection with wearable equipment, a preset number of control keys being arranged on the wearable equipment and different operations over the same key in the preset number of control keys corresponding to different preset control instructions, wherein the preset control instructions may include at least one of the first preset control instruction and the second preset control instruction, the first preset control instruction may be configured to control the working state of the image acquisition element or the audio acquisition element and the second preset control instruction may be configured to control the transmission state of the video information; and
a second instruction execution module, configured to, when target operation over a target key in the preset number of control keys is detected, execute a control instruction corresponding to the target operation over the target key.

In one particular embodiment, the steps of the live video broadcasting method are determined by computer program instructions.

Consequently, according to a third aspect, the invention is also directed to a computer program for executing the steps of the live video broadcasting method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

It should be understood that the foregoing general description and following detailed description are only exemplary and explanatory and not intended to limit the present disclosure.

### BRIEF DESCRIPTION OF THE DRAWINGS

The accompanying drawings, which are incorporated in and constitute a part of this specification, illustrate embodiments consistent with the present disclosure and, together with the specification, serve to explain the principles of the present disclosure.
Fig. 1 is a schematic diagram illustrating a system applicable to a live video broadcasting method, according to an exemplary embodiment.
Fig. 2 is a flow chart showing a method for interaction among a mobile terminal, smart glasses and a video playing terminal for live video broadcasting, according to an exemplary embodiment.
Fig. 3 is a flow chart showing interaction between a mobile terminal and wearable equipment, according to an exemplary embodiment.
Fig. 4 is another flow chart showing a method for interaction among a mobile terminal, smart glasses and a video playing terminal for live video broadcasting, according to an exemplary embodiment.
Fig. 5 is a flow chart showing interaction between a mobile terminal and a video playing terminal, according to an exemplary embodiment.
Fig. 6 is another flow chart showing interaction between a mobile terminal and wearable equipment, according to an exemplary embodiment.
Fig. 7 is a flow chart showing establishment of a relationship between operation over a control key and a preset control instruction, according to an exemplary embodiment.
Fig. 8 is a flow chart showing interaction among a mobile terminal, a video playing terminal and a headset, according to an exemplary embodiment.
Fig. 9 is another flow chart showing interaction between a mobile terminal and wearable equipment, according to an exemplary embodiment.
Fig. 10 is a flow chart showing interaction among a mobile terminal, a video playing terminal and smart glasses, according to an exemplary embodiment.
Fig. 11 is a first block diagram illustrating a live video broadcasting device, according to an exemplary embodiment.
Fig. 12 is a second block diagram illustrating a live video broadcasting device, according to an exemplary embodiment.
Fig. 13 is a third block diagram illustrating a live video broadcasting device, according to an exemplary embodiment.
Fig. 14 is a fourth block diagram illustrating a live video broadcasting device, according to an exemplary embodiment.
Fig. 15 is a fifth block diagram illustrating a live video broadcasting device, according to an exemplary embodiment.
Fig. 16 is a sixth block diagram illustrating a live video broadcasting device, according to an exemplary embodiment.
Fig. 17 is a seventh block diagram illustrating a live video broadcasting device, according to an exemplary embodiment.
Fig. 18 is an eighth block diagram illustrating a live video broadcasting device, according to an exemplary embodiment.
Fig. 19 is a ninth block diagram illustrating a live video broadcasting device, according to an exemplary embodiment.
Fig. 20 is a tenth block diagram illustrating a live video broadcasting device, according to an exemplary embodiment.
Fig. 21 is a block diagram illustrating a live video broadcasting device, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the present disclosure. Instead, they are merely examples of devices and methods consistent with some aspects related to the present disclosure as recited in the appended claims.

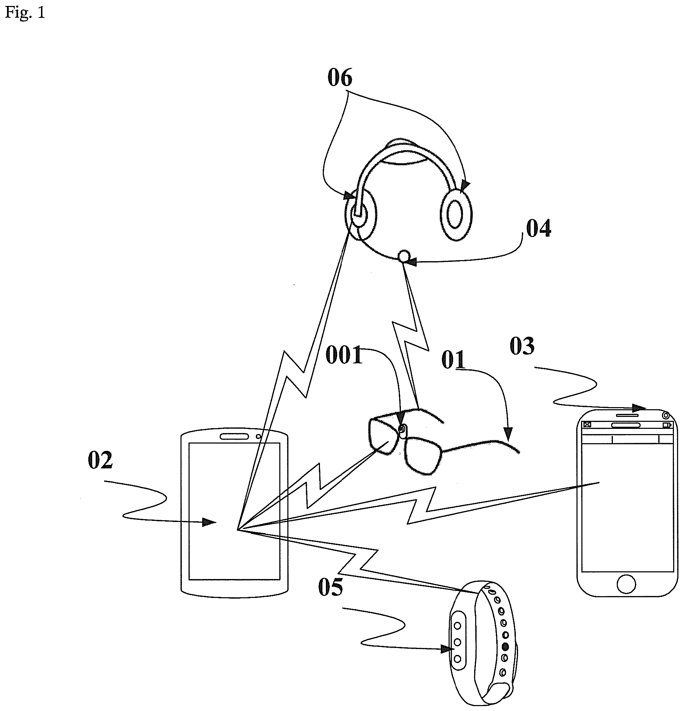

Referring to Fig. 1, Fig. 1 is a schematic diagram illustrating a system applicable to a live video broadcasting method, according to an exemplary embodiment. The system includes: smart glasses 01, a mobile terminal 02 and a video playing terminal 03, wherein an image acquisition element 001 is arranged on the smart glasses and the image acquisition element 001 may be a camera. The smart glasses 01 are also connected with an audio acquisition element 04, the audio acquisition element 04 may also be an element arranged on the mobile terminal 02, and the audio acquisition element 04 may be a Microphone (MIC).

A possible implementation manner for connection between the smart glasses 01 and the audio acquisition element 04 is that the audio acquisition element 04 is arranged on the glasses as an element of the smart glasses 01; and another possible implementation manner for connection between the smart glasses 01 and the audio acquisition element 04 is that the audio acquisition element 04 and the smart glasses 01 are two pieces of independent equipment and are connected with each other.

The mobile terminal 02 is connected with the smart glasses 01, and is also connected with the video playing terminal 03. Connection between the smart glasses 01 and the mobile terminal 02 and between the smart glasses 01 and the audio acquisition element 03 may be implemented in a BlueTooth (BT) manner. The mobile terminal 02 and the video playing terminal 03 may be connected through a wireless local area network, and may also be connected to the Internet to further implement mutual connection through their own mobile communication modules.

Optionally, as shown in Fig. 1, the system further includes wearable equipment 05, wherein the wearable equipment 05 has a display function, and for example, a display screen is arranged on the wearable equipment. A preset number of control keys may also be arranged on the wearable equipment 05. Connection between the wearable equipment 05 and the mobile terminal 02 may be implemented in the BT manner. The wearable equipment 05 may be wrist-wearing equipment, such as a smart watch and a smart band.

Optionally, as shown in Fig. 1, the system further includes a headset 06, and the connection between the headset 06 and the mobile terminal 02 may be implemented in the BT manner. An audio acquisition element 04 may also be arranged in the headset 06, that is, the audio acquisition element 04 is arranged on the headset 06 as an element of the headset 06. For example, a MIC is arranged in the headset. The headset 06 may also be replaced with another non-ear-wearing audio output device. There is such a possible condition that the headset 06 may be replaced with other equipment with an audio output function, such as audio equipment. There are no limits made in the present disclosure.

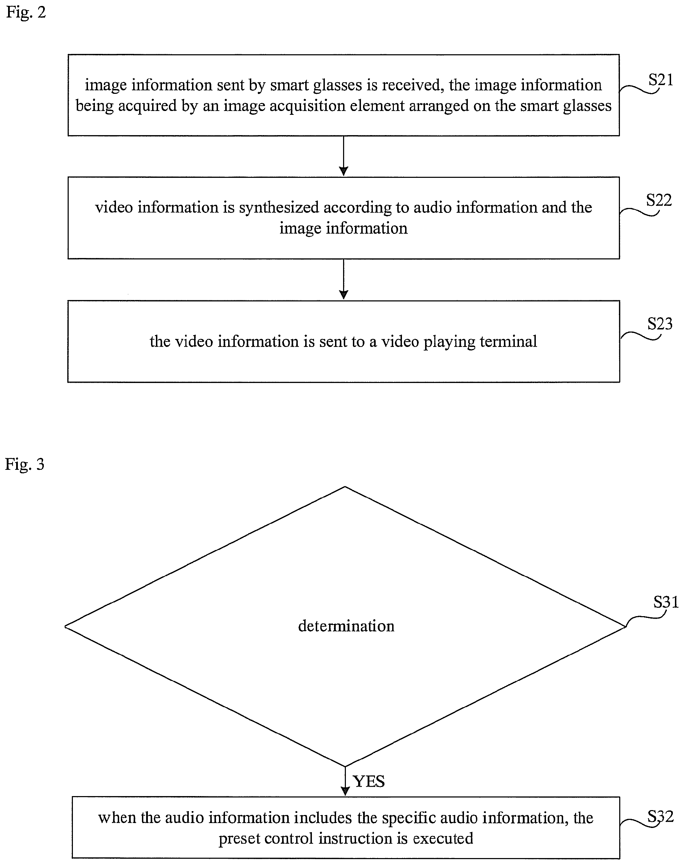

Referring to Fig. 2, Fig. 2 is a flow chart showing a live video broadcasting method, according to an exemplary embodiment. As shown in Fig. 2, the live video broadcasting method is adopted for the mobile terminal included in the system shown in Fig. 1, and the live video broadcasting method includes the following steps.

At Step S21, image information sent by smart glasses is received, the image information being acquired by an image acquisition element arranged on the smart glasses.

At Step S22, video information is synthesized according to audio information and the image information.

At Step S23, the video information is sent to a video playing terminal.

In the present disclosure, a user carries a mobile terminal, or places the mobile terminal within a range capable of keeping a communication connection with the smart glasses uninterrupted.

Since the image acquisition element is arranged on the smart glasses, if the user of the mobile terminal wears the smart glasses is in movement or under the condition that the user of the mobile terminal stops at a specific site, the image acquisition element may acquire image information within a vision field of the user of the mobile terminal and then send the acquired image information to the smart glasses, and the smart glasses sends the received image information to the mobile terminal used by the user.

After the process, the mobile terminal used by the user receives the image information sent by the smart glasses, the mobile terminal synthesizes the video information according to the audio information and the received image information, and then the mobile terminal sends the video information to the video playing terminal. The video playing terminal plays the received video information to a user of the video playing terminal.

By means of the above technical solution, if the user of the mobile terminal moves or under the condition that the user of the mobile terminal stops at the specific site, the user of the mobile terminal may conveniently and rapidly provide live video broadcasting for the user of the video playing terminal to share the video information of an environment where the user of the mobile terminal is located.

In the present disclosure, there may be multiple sources for the audio information in Step S22. Therefore, before Step S22 is executed, the mobile terminal may further execute the following steps:
receiving the audio information from the smart glasses, the audio information being acquired by an audio acquisition element connected with the smart glasses; or
acquiring directly the audio information .

Specifically, the audio information may be acquired by the audio acquisition element connected with the smart glasses, the audio acquisition element sends the acquired audio information to the smart glasses after acquiring the audio information in the environment where the user of the mobile terminal is located, and the smart glasses send the received audio information to the mobile terminal. The audio information may also be acquired by a built-in audio acquisition element of the mobile terminal.

In the present disclosure, considering that the audio information, which is acquired by the audio acquisition element, in the environment where the user is located may include voice information input to the audio acquisition element by the user of the mobile terminal. For example, the audio acquisition element may acquire the voice information generated by the user of the mobile terminal. The equipment included in the system shown in Fig. 1 may be controlled or a transmission state of the video information may be controlled according to the voice information generated by the user of the mobile terminal in the present disclosure. Therefore, as shown in Fig. 3, the mobile terminal may further execute the following steps.

At Step S31, it is determined whether the audio information includes specific audio information matched with a preset control instruction or not, the preset control instruction including at least one of a first preset control instruction and a second preset control instruction, the first preset control instruction being configured to control a working state of the image acquisition element or the audio acquisition element and the second preset control instruction being configured to control a transmission state of the video information; and

At Step S32, when the audio information includes the specific audio information, the preset control instruction is executed.

The working state of the image acquisition element in Step S32 may be that the image acquisition element is turned on or the image acquisition element is turned off, and may also be a parameter of the image acquisition element in a running process, such as an exposure value, a shutter speed and an aperture value. When the image acquisition element includes a front camera and a rear camera, the working state of the image acquisition element may be that: the front camera is turned on and the rear camera is turned off, or the front camera is turned off and the rear camera is turned on, or the like.

The working state of the audio acquisition element in Step S32 may be that the audio acquisition element is turned on or the audio acquisition element is turned off, and may also be a parameter of the audio acquisition element in a running process, such as sensitivity, noise suppression capability or the like of the audio acquisition element.

The transmission state of the video information may be: a transmission progress of the video information, or video information transmitted per second, or enabling of transmission of the video information, or disabling of transmission of the video information, or pausing of transmission of the video information, or transmission of next video information, or transmission of previous video information, or fast backward of the video information in a transmission process, fast forward of the video information in the transmission process, definition of the video information or the like.

When the user of the mobile terminal inputs voice information to the audio acquisition element, the audio acquisition element may acquire the voice information and send the voice information to the smart glasses for further sending to the mobile terminal used by the user. Then, the mobile terminal determines whether the voice information includes voice information matched with the preset control instruction or not, and executes the preset control instruction if the voice information includes the voice information matched with the preset control instruction.

For example, when the audio acquisition element is a MIC, the user of the mobile terminal inputs voice information "I want to turn on the MIC" to the MIC. The MIC sends the voice information to the smart glasses for further sending to the mobile terminal used by the user, and then the mobile terminal determines whether the voice information includes specific audio information matched with a preset control instruction or not, and controls the MIC to be turned on if determining that the voice information includes the specific voice information "turn on the MIC" matched with the preset control instruction.

By means of the technical solution, the user of the mobile terminal may input the voice information to further implement control over the equipment included in the system shown in Fig. 1 or control over the transmission state of the video information conveniently and rapidly. In the movement process of the user of the mobile terminal or under the condition that the user of the mobile terminal stops at the specific site, the user of the mobile terminal may input the voice information to implement control over the equipment or control over the transmission state of the video information rather than to operate the equipment to be controlled by the user, so that hands of the user of the mobile terminal may be freed to do other things, and experiences of the user of the mobile terminal are optimized.

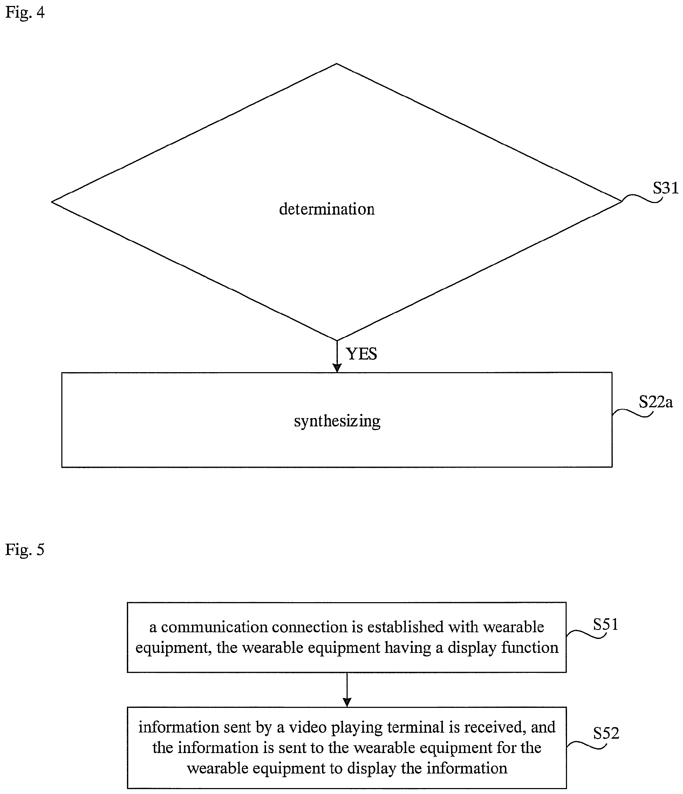

Since the audio acquisition element may acquire the audio information of the environment where the user of the mobile terminal is located, the audio information acquired by the audio acquisition element includes the audio information of the environment where the user is located, and the voice information generated by the user of the mobile terminal may also be acquired. The voice information input by the user may be exactly information that the user is intended to share with the user of the video playing terminal, and may also be configured to control the equipment included in the system shown in Fig. 1 or configured to control the transmission state of the video information. In the present disclosure, in order to avoid interference and troubles to the user of the video playing terminal, reduce power consumption of the mobile terminal and power consumption of the video playing terminal and save resources configured to transmit the video information, the voice information configured to control the equipment included in the system shown in Fig. 1 or the voice information configured to control the transmission state of the video information is considered as voice information not required to be sent to the video playing terminal. Therefore, as shown in Fig. 4, after the mobile terminal finishes executing Step S31, Step S22 includes the following step.

At Step S22a, when the audio information includes the specific audio information, the video information is synthesized according to residual audio information and the image information, the residual audio information being audio information except the specific audio information in the audio information.

After the audio acquisition element acquires and sends the audio information of the environment where the user of the mobile terminal is located to the smart glasses for further sending to the mobile terminal, the mobile terminal determines whether the received audio information includes the voice information configured to control the equipment of the system shown in Fig. 1 or the voice information configured to control the transmission state of the video information or not. When the voice information received by the mobile terminal includes the voice information configured to control the equipment of the system shown in Fig. 1 or the voice information configured to control the transmission state of the video information, the video information sent to the mobile terminal does not include the voice information configured to control the equipment of the system shown in Fig. 1 or the voice information configured to control the transmission state of the video information.

For example, when the audio acquisition element is a MIC, the user of the mobile terminal inputs voice information "I want to turn on the MIC" to the MIC. As such, the audio information acquired by the MIC includes the audio information of the environment where the user is located, and further includes the voice information input to the MIC by the user of the mobile terminal. The MIC sends the acquired audio information to the smart glasses for further sending to the mobile terminal used by the user. The mobile terminal determines whether the received audio information includes specific audio information or not, wherein the specific audio information being specific audio information matched with a preset control instruction. When it is determined that the received audio information includes voice information "turn on the MIC," and the voice information "turn on the MIC" is specific audio information matched with preset control instruction "start the MIC." The video information sent to the video playing terminal does not include voice information "I want to turn on the MIC," and the user of the video playing terminal may not hear voice information "I want to turn on the MIC" generated by the user of the mobile terminal.

By means of the technical solution, the voice information configured to control the equipment of the system shown in Fig. 1 or voice information configured to control the transmission state of the video information, which is input by the user of the mobile terminal, is not sent to the video playing terminal, so that the user of the video playing terminal may not hear the corresponding voice information, interference and troubles to the user of the video playing terminal are avoided, the power consumption of the mobile terminal and the power consumption of the video playing terminal are also reduced, the resources configured to transmit the video information are saved, and the experiences of the user of the video playing terminal and the user of the mobile terminal are optimized.

In the present disclosure, in order to implement interactive communication between the user of the mobile terminal and the user of the video playing terminal, the mobile terminal may, as shown in Fig. 5, further execute the following steps.

At Step S51, a communication connection is established with wearable equipment, the wearable equipment having a display function.

At Step S52, information sent by the video playing terminal is received, and the information is sent to the wearable equipment for the wearable equipment to display the information.

After the mobile terminal establishes the communication connection with the video playing terminal, information may be transmitted between the mobile terminal and the video playing terminal. The video playing terminal sends the information to the mobile terminal after the communication connection is established therebetween regardless of whether the mobile terminal sends the video information to the video playing terminal or not, and the video playing terminal may send the information to the mobile terminal after or before the mobile terminal sends the video information to the video playing terminal.

The user of the video playing terminal may send the information to the mobile terminal by virtue of the video playing terminal, and the information sent to the mobile terminal by the video playing terminal may be related to the video information sent to the video playing terminal by the mobile terminal, such as a feedback of the user of the video playing terminal to the video information sent to the video playing terminal by the mobile terminal, which may be "you're so cool!" The information sent to the mobile terminal by the video playing terminal may also be unrelated to the video information sent to the video playing terminal by the mobile terminal, such as chatting content between the user of the video playing terminal and the user of the mobile terminal, which may be "what's your mobile phone model?"

In order to make the user of the mobile terminal conveniently check a message sent to the mobile terminal by the video playing terminal, the user of the mobile terminal may wear the wearable equipment, then a communication connection is established between the mobile terminal and the wearable equipment, and in such a manner, the mobile terminal may send the received information to the wearable equipment for the wearable equipment to further display the information after receiving the information sent by the video playing terminal.

For example, when the wearable equipment is wrist-wearing control equipment, the user of the video playing terminal sends text information to the mobile terminal by virtue of the video playing terminal, and the text information may be sent to the wrist-wearing control equipment worn by the user of the mobile terminal for the wrist-wearing control equipment to display the text information. In such a manner, the user of the mobile terminal may check the information sent by the user of the video playing terminal by lifting the wrist.

By means of the technical solution, the user of the mobile terminal may conveniently and rapidly check the information sent by the user of the video playing terminal by virtue of the wearable equipment. In the movement process of the user of the mobile terminal or under the condition that the user of the mobile terminal stops at the specific site, the user of the mobile terminal may check the information sent by the user of the video playing terminal by virtue of the wearable equipment. For example, when the wearable equipment is wrist-wearing control equipment, the user of the mobile terminal may check the information sent by the user of the video playing terminal by lifting the wrist rather than operating the mobile terminal used by the user, so that the hands of the user of the mobile terminal may be freed to do other things, and the experiences of the user of the mobile terminal are optimized.

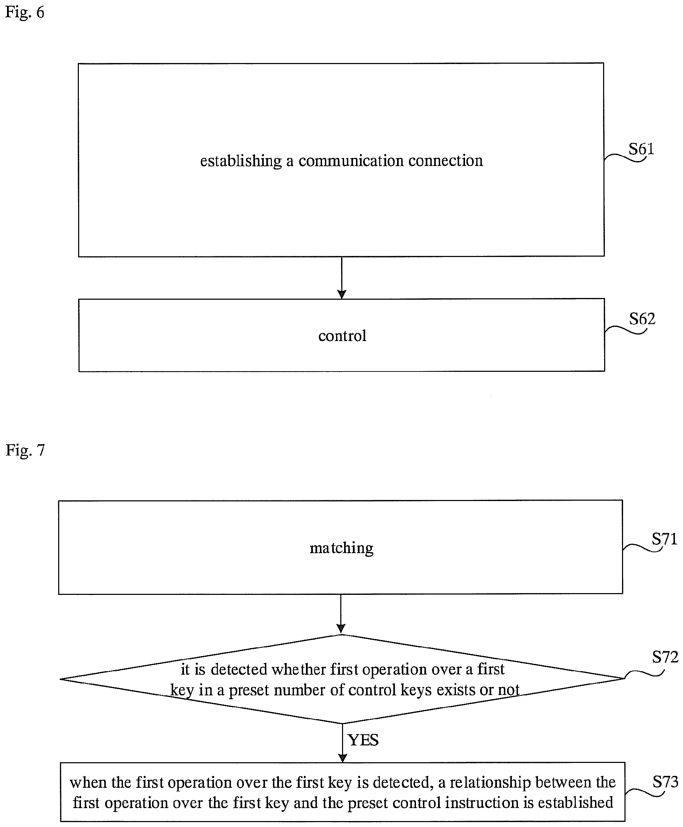

In the present disclosure, the equipment of the system shown in Fig. 1 may be controlled not only according to the voice information generated by the user of the mobile terminal. Under the condition that the communication connection is established between the mobile terminal and the wearable equipment, the equipment of the system shown in Fig. 1 or the transmission state or the video information may also be controlled through a preset number of control keys arranged on the wearable equipment. Therefore, the mobile terminal may, as shown in Fig. 6, further execute the following steps.

At Step S61, a communication connection is established with wearable equipment, a preset number of control keys being arranged on the wearable equipment and different operations over the same key in the preset number of control keys corresponding to different preset control instructions, wherein the preset control instructions include at least one of the first preset control instruction and the second preset control instruction, the first preset control instruction is configured to control the working state of the image acquisition element or the audio acquisition element and the second preset control instruction is configured to control the transmission state of the video information.

At Step S62, when target operation over a target key in the preset number of control keys is detected, a control instruction corresponding to the target operation over the target key is executed.

Since the wearable equipment is fixed to a body of the user compared with the mobile terminal required to be held by the user with a single hand or double hands, for example, the wrist-wearing control equipment is fixed to the wrist of the user, the user of the mobile terminal may conveniently operate the wearable equipment, and the mobile terminal may establish the communication connection with the wearable equipment and then implement control over the equipment of the system shown in Fig. 1 or control over the transmission state of the video information through the preset number of control keys of the wearable equipment, wherein the preset number of control keys may be physical keys, and may also be virtual keys, such as touch keys.

A meaning of "the working state of the image acquisition element" or "the working state of the audio acquisition element" or "the transmission state of the video information" in Step S61 refers to the description with respect to Step S31, and will not be elaborated herein for conciseness of the specification.

Each control key in the preset number of control keys may correspond to a preset control instruction, and each control key may correspond to multiple preset control instructions. When each control key corresponds to multiple preset control instructions, different operations over the control key corresponds to different preset control instructions.

For example, a control key numbered to be 1 corresponds to two preset control instructions of turning on the image acquisition element and turning off the image acquisition element, wherein single-click operation over the key numbered to be 1 corresponds to the preset control instruction of turning on the image acquisition element and double-click operation over the key numbered to be 1 corresponds to the preset control instruction of turning offg the image acquisition element.

When an operation over a control key in the preset number of control keys is detected, a control instruction corresponding to the operation over the control key is executed.

Still for the same example, when double-click operation over the key numbered to be 1 is detected, the preset control instruction of turning off the image acquisition element is executed, and then the image acquisition element is turned off.

By means of the technical solution, the user of the mobile terminal may execute operation on the wearable equipment to further implement control over the equipment of the system shown in Fig. 1 or control over the transmission state of the video information conveniently and rapidly. In the movement process of the user of the mobile terminal or under the condition that the user of the mobile terminal stops at the specific site, the user of the mobile terminal may execute operation on the wearable equipment to implement control over the equipment rather than operate the equipment to be controlled by the user. As such, the hands, originally for holding the mobile terminal, of the user of the mobile terminal may be freed to do other things, and the experiences of the user of the mobile terminal are optimized.

In the present disclosure, in consideration of a personalized requirement of the user of the mobile terminal, the user of the mobile terminal may set a relationship between different operations over the same key in the preset number of control keys and different preset control instructions. Therefore, the mobile terminal may, as shown in Fig. 7, further execute the following steps.

At Step S71, audio information matched with a preset control instruction is obtained, the preset control instruction being configured to control the working state of the image acquisition element or the audio acquisition element, or, the preset control instruction being configured to control the transmission state of the video information.

At Step S72, it is detected whether first operation over a first key in the preset number of control keys exists or not.

At Step S73, when the first operation over the first key is detected, a relationship between the first operation over the first key and the preset control instruction is established.

In the present disclosure, there are no limits to a sequence for the mobile terminal to execute Step S71 and Step S72. The mobile terminal may execute Step S71 at first and then execute Step S72, and the mobile terminal may also execute Step S72 at first and then execute Step S71, and may further execute Step S71 and Step S72 at the same time.

A meaning of "the working state of the image acquisition element" or "the working state of the audio acquisition element" or "the transmission state of the video information" in Step S71 refers to the descriptions with respect to Step S31, and will not be elaborated herein for conciseness of the specification.

The mobile terminal executes Step S71 on one hand.

As described above, the audio information acquired by the audio acquisition element may include the voice information generated by the user of the mobile terminal, and the voice information input by the user may be configured to control the equipment of the system shown in Fig. 1 or configured to control the transmission state of the video information. Therefore, the user may input the voice information configured to control the equipment of the system shown in Fig. 1 or the voice information configured to control the transmission state of the video information to the audio acquisition element and send the voice information to the smart glasses for further sending to the mobile terminal. In such a manner, the mobile terminal obtains the audio information acquired by the audio acquisition element, and the audio information acquired by the audio acquisition element includes the audio information matched with preset control.

For example, when the audio acquisition element is a MIC, the user of the mobile terminal inputs voice information "I want to turn on the MIC" to the MIC. The voice information acquired by the MIC includes the voice information input to the MIC by the user of the mobile terminal, and is sent to the glasses worn by the user of the mobile terminal and further sent to the mobile terminal used by the user. As such, the voice information received by the mobile terminal includes voice information "turn on the MIC," and the voice information "turn on the MIC" is matched with the preset control instruction "turn on the MIC."

The mobile terminal executes Step S72 on the other hand.

For the preset number of keys on the wearable equipment, the mobile terminal detects whether a certain key is operated by the user or not and specific operation of the user over the key.

After finishing executing Step S71 and Step S72, the mobile terminal executes Step S73.

If detecting the first operation over the first key and obtaining the audio information matched with the preset control instruction, the mobile terminal establishes the relationship between the preset control instruction and the first operation over the first key. In such a manner, if the user executes the first operation over the first key next time, the mobile terminal executes the preset control instruction. In the same way, for each control key in the preset number of control keys of the wrist-wearing equipment, the user may set relationships between different operations over different keys and different preset control instructions.

By means of the technical solution, the user of the mobile terminal may independently set the relationships between different operations over different keys and different preset control instructions, so that the user may implement control over the equipment of the system shown in Fig. 1 or control over the transmission state of the video information by performing different operations on different keys. The personalized requirement of the user of the mobile terminal is met, and user experiences are improved.

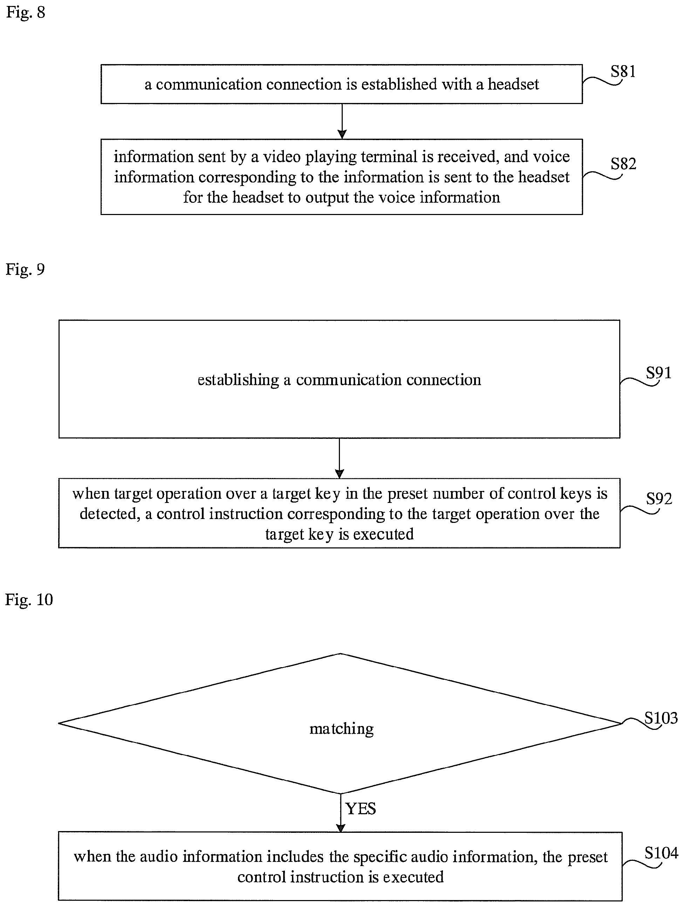

In the present disclosure, in order to implement interactive communication between the user of the mobile terminal and the user of the video playing terminal, the mobile terminal may, as shown in Fig. 8, further execute the following steps.

At Step S81, a communication connection is established with a headset.

At Step S82, the information sent by the video playing terminal is received, and voice information corresponding to the information is sent to the headset for the headset to output the voice information.

After the mobile terminal establishes the communication connection with the video playing terminal, the information may be transmitted between the mobile terminal and the video playing terminal.

The timing for the video playing terminal to send the information to the mobile terminal and whether information sent by the user of the video playing terminal to the mobile terminal is related to the video information sent to the video playing terminal by the mobile terminal or not may refer to Fig. 5 and the descriptions in the related embodiment, and will not be elaborated herein.

In order to make the user of the mobile terminal conveniently learn about a message sent to the mobile terminal by the video playing terminal, the user of the mobile terminal may wear the headset. Then, the mobile terminal establishes the communication connection with the headset, and in such a manner, the mobile terminal may send the voice information corresponding to the received information to the headset after receiving the information sent by the video playing terminal. Therefore, the user of the mobile terminal may listen to the information sent by the user of the video playing terminal.

For example, the user of the video playing terminal sends text information to the mobile terminal by virtue of the video playing terminal, and then voice information corresponding to the text information may be sent to the headset worn by the user of the mobile terminal. Therefore, the user of the mobile terminal may listen to the information sent by the user of the video playing terminal.

By means of the technical solution, the user of the mobile terminal may conveniently and rapidly listen to the information sent by the user of the video playing terminal via the headset. If the the user of the mobile terminal moves or under the condition that the user of the mobile terminal stops at the specific site, the user of the mobile terminal may learn about the information sent by the user of the video playing terminal rather than operate the mobile terminal used by the user, so that the hands of the user of the mobile terminal may be freed to do other things, and the experiences of the user of the mobile terminal are optimized.

In the present disclosure, control over a transmission state of the voice information corresponding to the information sent by the video playing terminal may be implemented through the preset number of control keys of the wearable equipment. Therefore, the mobile terminal may, as shown in Fig. 9, further execute the following steps.

At Step S91, a communication connection is established with wearable equipment, a preset number of control keys being arranged on the wearable equipment and different operations over the same key in the preset number of control keys corresponding to different preset control instructions, wherein the preset control instructions are configured to control a transmission state of the voice information.

At Step S92, when target operation over a target key in the preset number of control keys is detected, a control instruction corresponding to the target operation over the target key is executed.

A meaning of "the working state of the image acquisition element" or "the working state of the audio acquisition element" in Step S91 refers to the descriptions with respect to Step S31, and will not be elaborated herein for conciseness of the specification.

The "transmission state of the voice information corresponding to the received information" in Step S91 is similar to the "transmission state of the video information" in Step S31, and the transmission state of the voice information corresponding to the received information may be: a transmission progress of the voice information corresponding to the received information, or voice information transmitted per second corresponding to the received information, or enabling of transmission of the voice information corresponding to the received information, or disabling of transmission of the voice information corresponding to the received information, or pausing of transmission of the voice information corresponding to the received information, or transmission of voice information corresponding to the next received information, or transmission of voice information corresponding to previous received information, or fast backward of the voice information corresponding to the received information in a transmission process, or fast forward of the voice information corresponding to the received information in the transmission process, or definition of the voice information corresponding to the received information or the like.

Implementation manners for Step S91 to Step S92 are the same as implementation manners for Step S61 to Step S62, and the difference is that the preset control instructions have different functions. Therefore, the implementation manners for Step S91 to Step S92 refer to descriptions about the implementation manners for Step S61 to Step S62, and will not be elaborated herein.

For example, the user of the video playing terminal sends text information to the mobile terminal by virtue of the video playing terminal, and when sending voice information corresponding to the text information to the headset worn by the user of the mobile terminal, the user of the mobile terminal may implement control over the voice information corresponding to the received information, such as control over a playing speed of the voice information corresponding to the received information, through different operations over different keys of the wrist-wearing control equipment.

By means of the technical solution, the user of the mobile terminal may execute operation on the wearable equipment to implement control over the transmission state of the voice information corresponding to the information sent to the mobile terminal by the video playing terminal conveniently and rapidly. In the movement process of the user of the mobile terminal or under the condition that the user of the mobile terminal stops at the specific site, the user of the mobile terminal may execute operation on the wearable equipment to implement control over the transmission state of the voice information corresponding to the information sent to the mobile terminal by the video playing terminal, so that the experiences of the user of the mobile terminal are optimized.

Optionally, the preset control instructions in the embodiment shown in Fig. 7 may further be configured to control the transmission state of the voice information corresponding to the received information.

In the present disclosure, the transmission state of the voice information corresponding to the information sent to the mobile terminal by the video playing terminal may further be controlled according to the voice information generated by the user of the mobile terminal. Therefore, after finishing executing Step S82 to receive the information sent by the video playing terminal, the mobile terminal may, as shown in Fig. 10, further execute the following steps.

At Step S103, it is determined whether the audio information includes specific audio information matched with a preset control instruction or not, the preset control instruction being configured to control the transmission state of the voice information.

At Step S104, when the audio information includes the specific audio information, the preset control instruction is executed.

A meaning of the "transmission state of the voice information corresponding to the received information" in Step S103 refers to the descriptions with respect to Step S91, and will not be elaborated herein for conciseness of the specification.

Implementation manners for Step S103 to Step S104 are the same as implementation manners for Step S31 to Step S32, and the difference is that the preset control instructions have different functions. Therefore, the implementation manners for Step S103 to Step S104 refer to the descriptions about the implementation manners for Step S31 to Step S32, and will not be elaborated herein.

For example, when the audio acquisition element is a MIC, the user of the mobile terminal inputs voice information "I want to listen to voice information corresponding to a next received message" to the MIC. The MIC sends the voice information to the mobile terminal used by the user. The mobile terminal determines whether the voice information includes specific audio information matched with a preset control instruction or not, and sends the voice information corresponding to the next received message to the headset when determining that the voice information includes specific audio information "play the voice information corresponding to the next received message" matched with the preset control instruction, and in such a manner, the user of the mobile terminal may hear the voice information corresponding to the next received message.

By means of the technical solution, the user of the mobile terminal may input the voice information to further implement control over the transmission state of the voice information corresponding to the information sent to the mobile terminal by the video playing terminal conveniently and rapidly. In the movement process of the user of the mobile terminal or under the condition that the user of the mobile terminal stops at the specific site, the user of the mobile terminal may input the voice information to implement control over the transmission state of the voice information corresponding to the information sent to the mobile terminal by the video playing terminal rather than operate the equipment to be controlled by the user, so that the hands of the user of the mobile terminal may be freed to do other things, and the experiences of the user of the mobile terminal are optimized.

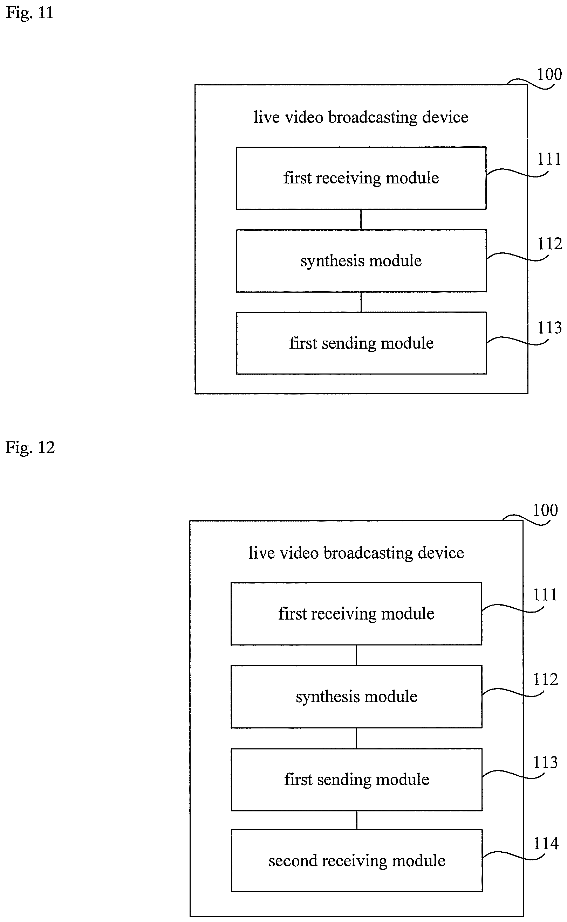

Fig. 11 is a block diagram of a live video broadcasting device, according to an exemplary embodiment. Referring to Fig. 11, the device 100 includes a first receiving module 111, a synthesis module 112 and a first sending module 113.

The first receiving module 111 is configured to receive image information sent by smart glasses, the image information being acquired by an image acquisition element arranged on the smart glasses;
the synthesis module 112 is configured to synthesize video information according to audio information and the image information; and
the first sending module 113 is configured to send the video information to a video playing terminal.

Optionally, the device 100 may further, besides the first receiving module 111, the synthesis module 112 and the first sending module 113, include: a second receiving module 114 and/or an acquisition module 115. That is, the device 100 may, as shown in Fig. 12, include: the first receiving module 111, the synthesis module 112, the first sending module 113 and the second receiving module 114.

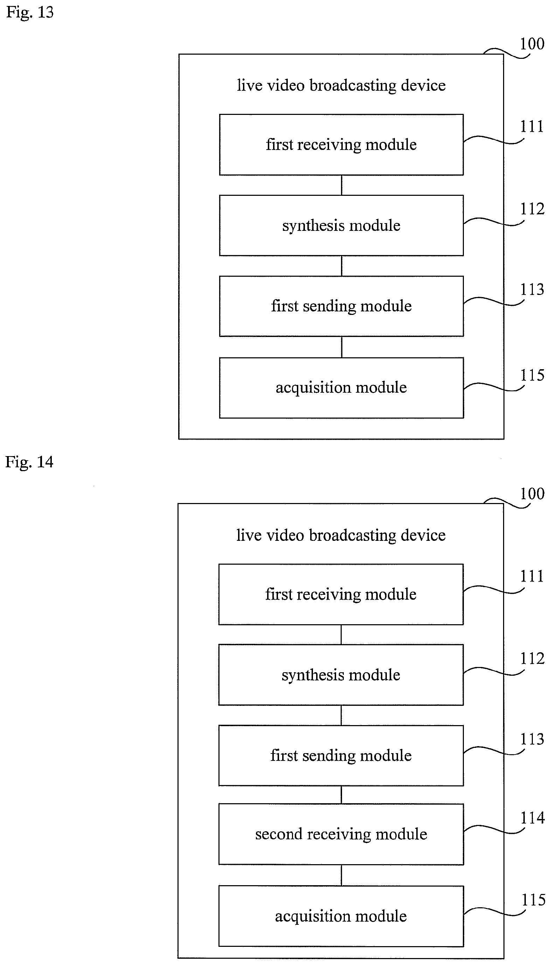

The device 100 may also, as shown in Fig. 13, include: the first receiving module 111, the synthesis module 112, the first sending module 113 and the acquisition module 115.

The device may further, as shown in Fig. 14, include: the first receiving module 111, the synthesis module 112, the first sending module 113, the second receiving module 114 and the acquisition module 115.

The second receiving module 114 is configured to receive the audio information sent by the smart glasses, the audio information being acquired by an audio acquisition element connected with the smart glasses.

The acquisition module 115 is configured to acquire the audio information acquired by a mobile terminal.

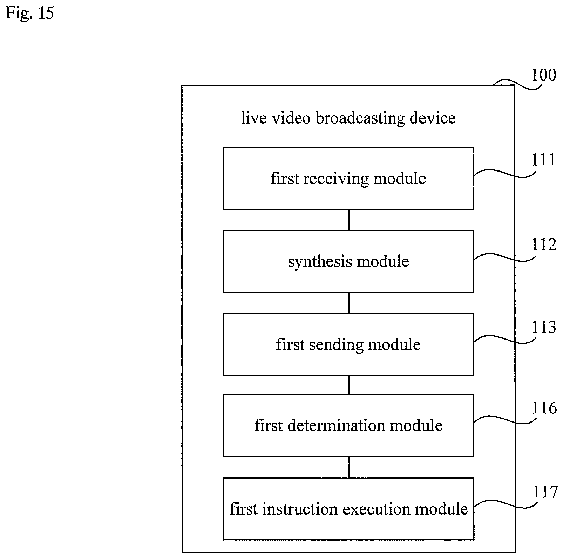

Optionally, as shown in Fig. 15, the device 100 may further, besides the first receiving module 111, the synthesis module 112 and the first sending module 113, include:
a first determination module 116, configured to determine whether the audio information includes specific audio information matched with a preset control instruction or not, the preset control instruction including at least one of a first preset control instruction and a second preset control instruction, the first preset control instruction being configured to control a working state of the image acquisition element or the audio acquisition element and the second preset control instruction being configured to control a transmission state of the video information; and
a first instruction execution module 117, configured to, when the audio information includes the specific audio information, execute the preset control instruction.

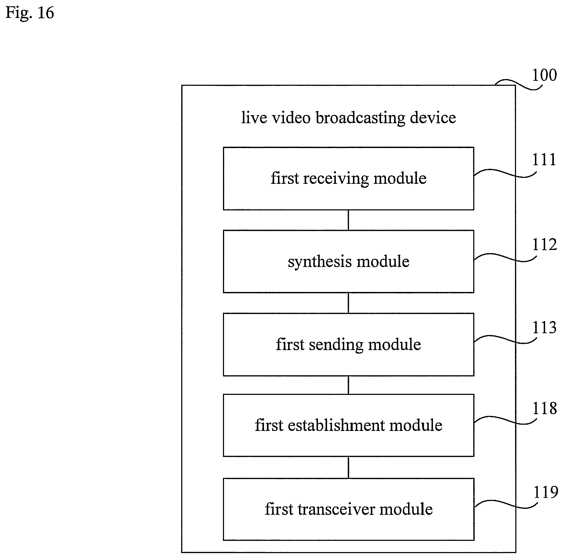

Optionally, as shown in Fig. 16, the device may further, besides the first receiving module 111, the synthesis module 112 and the first sending module 113, include:
a first establishment module 118, configured to establish a communication connection with wearable equipment, the wearable equipment having a display function; and
a first transceiver module 119, configured to receive information sent by the video playing terminal, and send the information to the wearable equipment for the wearable equipment to display the information.

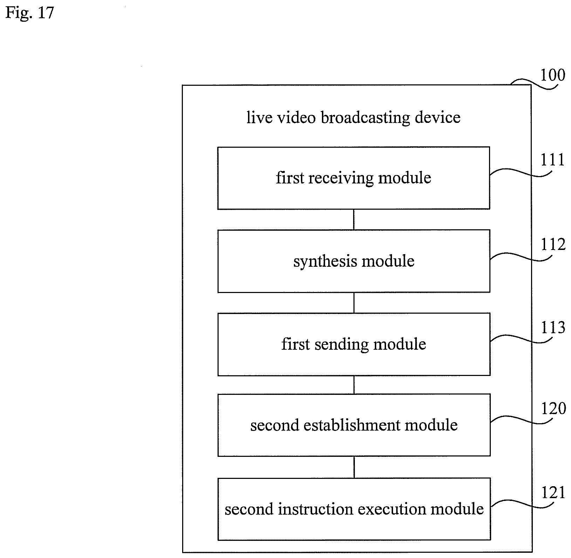

Optionally, as shown in Fig. 17, the device 100 may further, besides the first receiving module 111, the synthesis module 112 and the first sending module 113, include:
a second establishment module 120, configured to establish a communication connection with wearable equipment, a preset number of control keys being arranged on the wearable equipment and different operations over the same key in the preset number of control keys corresponding to different preset control instructions, wherein the preset control instructions include at least one of the first preset control instruction and the second preset control instruction, the first preset control instruction is configured to control the working state of the image acquisition element or the audio acquisition element and the second preset control instruction is configured to control the transmission state of the video information; and
a second instruction execution module 121, configured to, when target operation over a target key in the preset number of control keys is detected, execute a control instruction corresponding to the target operation over the target key.

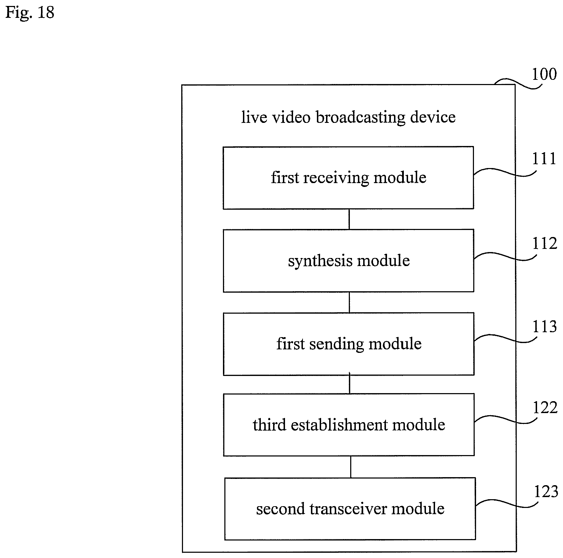

Optionally, as shown in Fig. 18, the device 100 may further, besides the first receiving module 111, the synthesis module 112 and the first sending module 113, include:
a third establishment module 122, configured to establish a communication connection with a headset; and
a second transceiver module 123, configured to receive the information sent by the video playing terminal, and send voice information corresponding to the information to the headset for the headset to output the voice information.

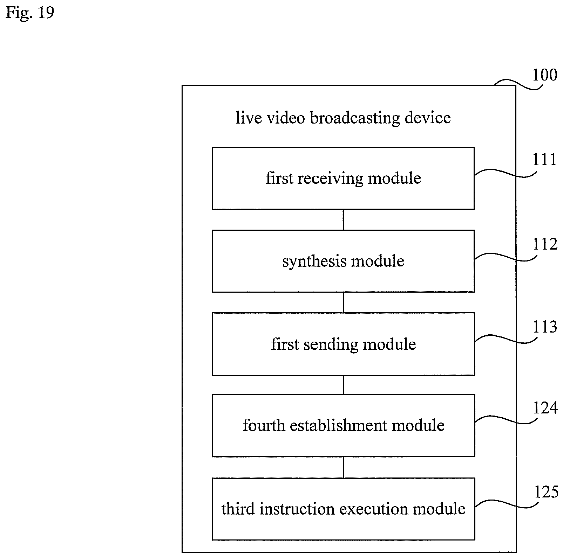

Optionally, as shown in Fig. 19, the device 100 may further, besides the first receiving module 111, the synthesis module 112 and the first sending module 113, include:
a fourth establishment module 124, configured to establish a communication connection with wearable equipment, a preset number of control keys being arranged on the wearable equipment and different operations over the same key in the preset number of control keys corresponding to different preset control instructions, wherein the preset control instructions are configured to control a transmission state of the voice information; and
a third instruction execution module 125, configured to, when target operation over a target key in the preset number of control keys is detected, execute a control instruction corresponding to the target operation over the target key.

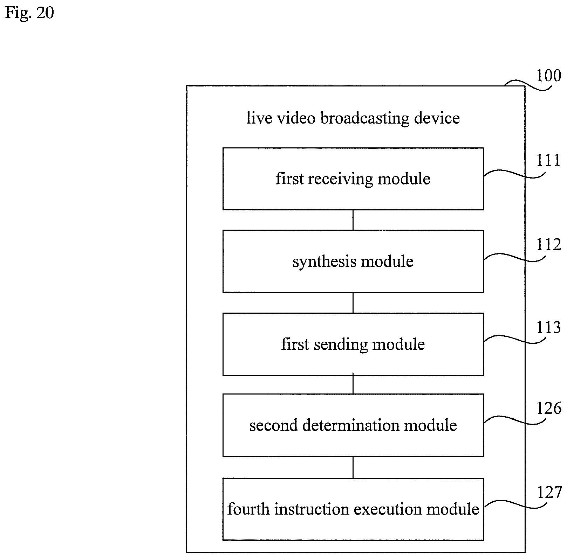

Optionally, as shown in Fig. 20, the device 100 may further, besides the first receiving module 111, the synthesis module 112 and the first sending module 113, include:
a second determination module 126, configured to, after the information sent by the video playing terminal is received, judge whether the audio information includes specific audio information matched with a preset control instruction or not, the preset control instruction being configured to control the transmission state of the voice information; and
a fourth instruction execution module 127, configured to, when the audio information includes the specific audio information, execute the preset control instruction.

With respect to the devices in the above embodiments, the specific manners for performing operations for individual modules therein have been described in detail in the embodiments regarding the methods, which will not be elaborated herein.

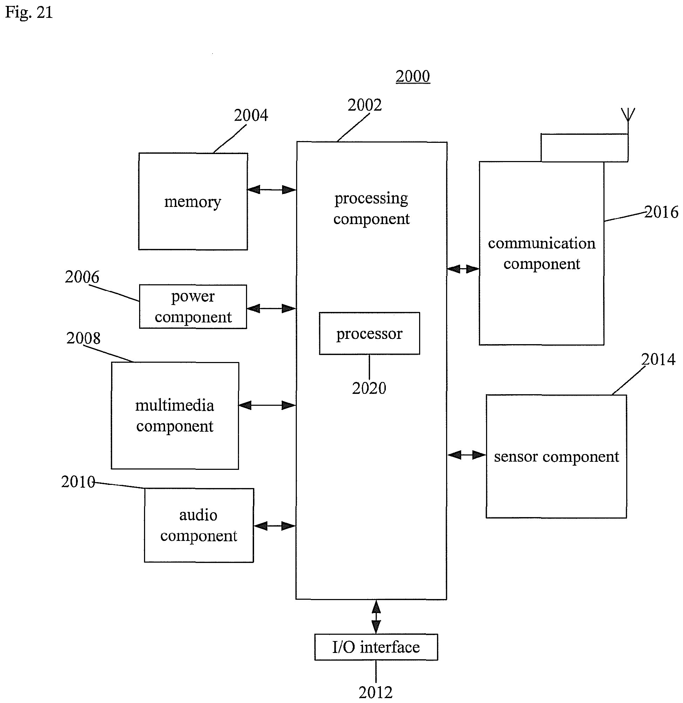

Fig. 21 is a block diagram illustrating a live video broadcasting device 2000, according to an exemplary embodiment. For example, the device 2000 may be a mobile phone, a computer, a digital broadcast terminal, a messaging device, a gaming console, a tablet, a medical device, exercise equipment, a Personal Digital Assistant (PDA) or the like.

Referring to Fig. 21, the device 2000 may include one or more of the following components: a processing component 2002, a memory 2004, a power component 2006, a multimedia component 2008, an audio component 2010, an Input/Output (I/O) interface 2012, a sensor component 2014, and a communication component 2016.

The processing component 2002 typically controls overall operations of the device 2000, such as the operations associated with display, telephone calls, data communications, camera operations, and recording operations. The processing component 2002 may include one or more processors 2020 to execute instructions to perform all or part of the steps of the live video broadcasting method. Moreover, the processing component 2002 may include one or more modules which facilitate interaction between the processing component 2002 and the other components. For instance, the processing component 2002 may include a multimedia module to facilitate interaction between the multimedia component 2008 and the processing component 2002.

The memory 2004 is configured to store various types of data to support the operation of the device 2000. Examples of such data include instructions for any application programs or methods operated on the device 2000, contact data, phonebook data, messages, pictures, video, etc. The memory 2004 may be implemented by any type of volatile or non-volatile memory devices, or a combination thereof, such as a Static Random Access Memory (SRAM), an Electrically Erasable Programmable Read-Only Memory (EEPROM), an Erasable Programmable Read-Only Memory (EPROM), a Programmable Read-Only Memory (PROM), a Read-Only Memory (ROM), a magnetic memory, a flash memory, and a magnetic or optical disk.

The power component 2006 provides power for various components of the device 2000. The power component 2006 may include a power management system, one or more power supplies, and other components associated with the generation, management and distribution of power for the device 2000.

The multimedia component 2008 includes a screen providing an output interface between the device 2000 and a user. In some embodiments, the screen may include a Liquid Crystal Display (LCD) and a Touch Panel (TP). If the screen includes the TP, the screen may be implemented as a touch screen to receive an input signal from the user. The TP includes one or more touch sensors to sense touches, swipes and gestures on the TP. The touch sensors may not only sense a boundary of a touch or swipe action, but also sense a duration and pressure associated with the touch or swipe action. In some embodiments, the multimedia component 2008 includes a front camera and/or a rear camera. The front camera and/or the rear camera may receive external multimedia data when the device 2000 is in an operation mode, such as a photographing mode or a video mode. Each of the front camera and the rear camera may be a fixed optical lens system or have focusing and optical zooming capabilities.

The audio component 2010 is configured to output and/or input an audio signal. For example, the audio component 2010 includes a MIC, and the MIC is configured to receive an external audio signal when the device 2000 is in the operation mode, such as a call mode, a recording mode and a voice recognition mode. The received audio signal may be further stored in the memory 2004 or sent through the communication component 2016. In some embodiments, the audio component 2010 further includes a speaker configured to output the audio signal.

The I/O interface 2012 provides an interface between the processing component 2002 and a peripheral interface module, and the peripheral interface module may be a keyboard, a click wheel, a button or the like. The button may include, but not limited to: a home button, a volume button, a starting button and a locking button.

The sensor component 2014 includes one or more sensors configured to provide status assessment in various aspects for the device 2000. For instance, the sensor component 2014 may detect an on/off status of the device 2000 and relative positioning of components, such as a display and small keyboard of the device 2000. The sensor component 2014 may further detect a change in a position of the device 2000 or a component of the device 2000, presence or absence of contact between the user and the device 2000, orientation or acceleration/deceleration of the device 2000 and a change in temperature of the device 2000. The sensor component 2014 may include a proximity sensor configured to detect presence of an object nearby without any physical contact. The sensor component 2014 may also include a light sensor, such as a Complementary Metal Oxide Semiconductor (CMOS) or Charge Coupled Device (CCD) image sensor, configured for use in an imaging application. In some embodiments, the sensor component 2014 may also include an acceleration sensor, a gyroscope sensor, a magnetic sensor, a pressure sensor or a temperature sensor.

The communication component 2016 is configured to facilitate wired or wireless communication between the device 2000 and another device. The device 2000 may access a communication-standard-based wireless network, such as a Wireless Fidelity (WiFi) network, a 2nd-Generation (2G) or 3rd-Generation (3G) network or a combination thereof. In an exemplary embodiment, the communication component 2016 receives a broadcast signal or broadcast associated information from an external broadcast management system through a broadcast channel. In an exemplary embodiment, the communication component 2016 further includes a Near Field Communication (NFC) module to facilitate short-range communication. For example, the NFC module may be implemented on the basis of a Radio Frequency Identification (RFID) technology, an Infrared Data Association (IrDA) technology, an Ultra-WideBand (UWB) technology, a BlueTooth (BT) technology and another technology.

In an exemplary embodiment, the device 2000 may be implemented by one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, and is configured to execute the abovementioned live video broadcasting method.

In an exemplary embodiment, there is also provided a non-transitory computer-readable storage medium including instructions, such as the memory 2004 including instructions, and the instructions may be executed by the processor 2020 of the device 2000 to implement the abovementioned live video broadcasting method. For example, the non-transitory computer-readable storage medium may be a ROM, a Compact Disc Read-Only Memory (CD-ROM), a magnetic tape, a floppy disc, an optical data storage device or the like.

Other embodiments of the present disclosure will be apparent to those skilled in the art from consideration of the specification and practice of the present disclosure. This application is intended to cover any variations, uses, or adaptations of the present disclosure following the general principles thereof and including such departures from the present disclosure as come within known or customary practice in the art.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

## Claims

1. A live video broadcasting method, the method being applied to a mobile terminal (02) and comprising:
a step of receiving (S21) image information sent by smart glasses (01), the image information being acquired by an image acquisition element (001) arranged on the smart glasses (01);
a step of receiving audio information from the smart glasses (01), the audio information being acquired by the audio acquisition element (04) connected with the smart glasses (01); or a step of directly acquiring the audio information acquired by the mobile terminal (02);
a step of synthesizing (S22) video information according to the audio information and the image information;
a step of sending (S23) the video information to a video playing terminal (03);
**characterized in that** the method further comprises:
a step of determining (S31) whether the audio information comprises specific audio information matched with a preset control instruction or not, the preset control instruction comprising at least one of a first preset control instruction and a second preset control instruction, wherein the first preset control instruction is configured to control a working state of the image acquisition element (001) or the audio acquisition element (04) and the second preset control instruction is configured to control a transmission state of the video information; and
in the case that the audio information comprises the specific audio information, a step of executing (S32) the preset control instruction,
wherein the step of synthesizing (S22) comprises synthesizing the video information from the image information and the audio information except said specific audio information.

2. The method according to claim 1, further comprising:
establishing (S51) a communication connection with a wearable equipment (05), the wearable equipment (05) having a display function; and
receiving (S52) information sent by the video playing terminal (03), and
sending the information to the wearable equipment (05) for the wearable equipment (05) to display the information.

3. The method according to any one of claims 1-2, further comprising:
establishing (S61) a communication connection with the wearable equipment (05), a preset number of control keys being arranged on the wearable equipment (05) and different operations over the same key in the preset number of control keys corresponding to different preset control instructions, wherein the preset control instructions comprise at least one of the first preset control instruction and the second preset control instruction, the first preset control instruction is configured to control the working state of the image acquisition element (001) or the audio acquisition element (04) and the second preset control instruction is configured to control the transmission state of the video information; and
in the case of detecting target operation over a target key in the preset number of control keys, executing (S62) a control instruction corresponding to the target operation over the target key.

4. The method according to any one of claims 1-3, further comprising:
establishing (S81) a communication connection with a headset (06); and
receiving (S82) information sent by the video playing terminal (03), and sending voice information corresponding to the information to the headset (06) for the headset (06) to output the voice information.

5. The method according to claim 4, further comprising:
establishing (S91) a communication connection with wearable equipment (05), a preset number of control keys being arranged on the wearable equipment (05) and different operations over the same key in the preset number of control keys corresponding to different preset control instructions, wherein the preset control instructions are configured to control a transmission state of the voice information; and
in the case of detecting target operation over a target key in the preset number of control keys, executing (S92) a control instruction corresponding to the target operation over the target key.

6. The method according to claim 4, after receiving (S82) the information sent by the video playing terminal (03), the method further comprising:
determining (S103) whether the audio information comprises specific audio information matched with a preset control instruction or not, the preset control instruction being configured to control the transmission state of the voice information; and
in the case that the audio information comprises the specific audio information, executing (S104) the preset control instruction.

7. A live video broadcasting device, the device being configured in a mobile terminal (02) and comprising:
a first receiving module (111), configured to receive image information sent by smart glasses (01), the image information being acquired by an image acquisition element (001) arranged on the smart glasses (01);
a second receiving module (114) configured to receive audio information sent by the smart glasses (01), the audio information being acquired by an audio acquisition element (04) connected with the smart glasses (01); and/or an acquisition module (115) configured to acquire the audio information acquired by the mobile terminal (02);
a synthesis module (112), configured to synthesize video information according to the audio information and the image information;
a first sending module (113), configured to send the video information to a video playing terminal (03);
**characterized in that** the device further comprises:
a first determination module (116), configured to determine whether the audio information comprises specific audio information matched with a preset control instruction or not, the preset control instruction comprising at least one of a first preset control instruction and a second preset control instruction, wherein the first preset control instruction is configured to control a working state of the image acquisition element (001) or the audio acquisition element (04) and the second preset control instruction is configured to control a transmission state of the video information; and
a first instruction execution module (117), configured to, when the audio information comprises the specific audio information, execute the preset control instruction,
wherein the synthesis module (112) is further configured to synthesize the video information from the image information and the audio information except the specific audio information.

8. The device according to claim 7, further comprising:
a first establishment module (118), configured to establish a communication connection with a wearable equipment (05), the wearable equipment (05) having a display function; and
a first transceiver module (119), configured to receive information sent by the video playing terminal (03), and send the information to the wearable equipment (05) for the wearable equipment (05) to display the information.

9. The device according to any one of claims 7-8, further comprising:
a second establishment module (120), configured to establish a communication connection with the wearable equipment (05), a preset number of control keys being arranged on the wearable equipment (05) and different operations over the same key in the preset number of control keys corresponding to different preset control instructions, wherein the preset control instructions comprise at least one of the first preset control instruction and the second preset control instruction, the first preset control instruction is configured to control the working state of the image acquisition element (001) or the audio acquisition element (04) and the second preset control instruction is configured to control the transmission state of the video information; and
a second instruction execution module (121), configured to, when target operation over a target key in the preset number of control keys is detected, execute a control instruction corresponding to the target operation over the target key.

10. A computer program including instructions for executing the steps of the live video broadcasting method according to any one of claims 1 to 6 when said program is executed by a computer.

11. A recording medium readable by a computer and having recorded thereon a computer program including instructions for executing the steps of the live video broadcasting method according to any one of claims 1 to 6.

## Patentansprüche

1. Live-Video-Rundfunkverfahren, wobei das Verfahren auf ein mobiles Endgerät (02) angewendet wird und umfasst:
einen Schritt des Empfangens (S21) von Bildinformationen, die von einer intelligenten Brille (01) gesendet werden, wobei die Bildinformationen von einem Bildaufnahmeelement (001) erfasst werden, das an der intelligenten Brille (01) angeordnet ist,
einen Schritt des Empfangens von Audioinformationen von der intelligenten Brille (01), wobei die Audioinformationen durch ein mit der intelligenten Brille (01) verbundenes Audioaufnahmeelement (04) erfasst werden, oder einen Schritt des direkten Erfassens der von dem mobilen Endgerät (02) erfassten Audioinformationen,
einen Schritt des Synthetisierens (S22) von Videoinformationen entsprechend den Audioinformationen und den Bildinformationen,
einen Schritt des Sendens (S23) der Videoinformationen an ein Videowiedergabe-Endgerät (03),
**dadurch gekennzeichnet, dass** das Verfahren ferner umfasst:
einen Schritt des Bestimmens (S31), ob die Audioinformationen spezifische Audioinformationen umfassen, die mit einer voreingestellten Steueranweisung übereinstimmen oder nicht, wobei die voreingestellte Steueranweisung mindestens eine von einer ersten voreingestellten Steueranweisung und einer zweiten voreingestellten Steueranweisung umfasst, wobei die erste voreingestellte Steueranweisung konfiguriert ist, um einen Arbeitszustand des Bildaufnahmeelements (001) oder des Audioaufnahmeelements (04) zu steuern, und die zweite voreingestellte Steueranweisung konfiguriert ist, um einen Übertragungszustand der Videoinformationen zu steuern, und
für den Fall, dass die Audioinformationen die spezifischen Audioinformationen umfassen, einen Schritt des Ausführens (S32) der voreingestellten Steueranweisung,
wobei der Schritt des Synthetisierens (S22) das Synthetisieren der Videoinformationen aus den Bildinformationen und den Audioinformationen mit Ausnahme der spezifischen Audioinformationen umfasst.

2. Verfahren nach Anspruch 1, ferner umfassend:
Herstellen (S51) einer Kommunikationsverbindung mit einer am Körper tragbaren Vorrichtung (05), wobei die am Körper tragbare Vorrichtung (05) eine Anzeigefunktion aufweist,
Empfangen (S52) von Informationen, die von dem Videowiedergabe-Endgerät (03) gesendet werden, und
Senden der Informationen an die am Körper tragbare Vorrichtung (05), damit die am Körper tragbare Vorrichtung (05) die Informationen anzeigt.

3. Verfahren nach einem der Ansprüche 1 bis 2, ferner umfassend:
Herstellen (S61) einer Kommunikationsverbindung mit der am Körper tragbaren Vorrichtung (05), wobei eine vorgegebene Anzahl von Steuertasten an der am Körper tragbaren Vorrichtung (05) angeordnet ist und verschiedene Operationen über dieselbe Taste in der vorgegebenen Anzahl von Steuertasten, die unterschiedlichen voreingestellten Steueranweisungen entsprechen, eingerichtet sind, wobei die voreingestellten Steueranweisungen mindestens eine von der ersten voreingestellten Steueranweisung und der zweiten voreingestellten Steueranweisung umfassen, wobei die erste voreingestellte Steueranweisung konfiguriert ist, um den Arbeitszustand des Bildaufnahmeelements (001) oder des Audioaufnahmeelements (04) zu steuern, und die zweite voreingestellte Steueranweisung konfiguriert ist, um den Übertragungszustand der Videoinformationen zu steuern, und
für den Fall des Erkennens einer Zieloperation über eine Zieltaste in der vorgegebenen Anzahl von Steuertasten, das Ausführen (S62) einer Steueranweisung, die der Zieloperation über die Zieltaste entspricht.

4. Verfahren nach einem der Ansprüche 1 bis 3, ferner umfassend:
Herstellen (S81) einer Kommunikationsverbindung mit einem Headset (06), und
Empfangen (S82) von Informationen, die von dem Videowiedergabe-Endgerät (03) gesendet werden, und Senden von Sprachinformationen, die den Informationen an das Headset (06) entsprechen, damit das Headset (06) die Sprachinformationen ausgibt.

5. Verfahren nach Anspruch 4, ferner umfassend:
Herstellen (S91) einer Kommunikationsverbindung mit einer am Körper tragbaren Vorrichtung (05), wobei eine vorgegebene Anzahl von Steuertasten an der am Körper tragbaren Vorrichtung (05) angeordnet ist und verschiedene Operationen über dieselbe Taste in der vorgegebenen Anzahl von Steuertasten, die unterschiedlichen voreingestellten Steueranweisungen entsprechen, eingerichtet sind, wobei die voreingestellten Steueranweisungen konfiguriert sind, um einen Übertragungszustand der Sprachinformationen zu steuern, und
für den Fall des Erkennens einer Zieloperation über eine Zieltaste in der vorgegebenen Anzahl von Steuertasten, Ausführen (S92) einer Steueranweisung, die der Zieloperation über die Zieltaste entspricht.

6. Verfahren nach Anspruch 4, wobei nach dem Empfangen (S82) der von dem Videowiedergabe-Endgerät (03) gesendeten Informationen, das Verfahren ferner umfasst:
Bestimmen (S103), ob die Audioinformationen spezifische Audioinformationen umfassen, die mit einer voreingestellten Steueranweisung übereinstimmen oder nicht, wobei die voreingestellte Steueranweisung konfiguriert ist, um den Übertragungszustand der Sprachinformationen zu steuern, und
für den Fall, dass die Audioinformationen die spezifischen Audioinformationen umfassen, Ausführen (S104) der voreingestellten Steueranweisung.

7. Live-Video-Rundfunkvorrichtung, wobei die Vorrichtung in einem mobilen Endgerät (02) konfiguriert ist und umfasst:
ein erstes Empfangsmodul (111), das konfiguriert ist, um Bildinformationen zu empfangen, die von einer intelligenten Brille (01) gesendet werden, wobei die Bildinformationen von einem Bildaufnahmeelement (001) erfasst werden, das an der intelligenten Brille (01) angeordnet ist,
ein zweites Empfangsmodul (114), das konfiguriert ist, um von der intelligenten Brille (01) gesendete Audioinformationen zu empfangen, wobei die Audioinformationen von einem mit der intelligenten Brille (01) verbundenen Audioaufnahmeelement (04) erfasst werden, und/oder ein Erfassungsmodul (115), das konfiguriert ist, um von dem mobilen Endgerät (02) erfasste Audioinformationen zu erfassen,
ein Synthesemodul (112), das konfiguriert ist, um Videoinformationen gemäß den Audioinformationen und den Bildinformationen zu synthetisieren,
ein erstes Sendemodul (113), das konfiguriert ist, um die Videoinformationen an ein Videowiedergabe-Endgerät (03) zu senden,
**dadurch gekennzeichnet, dass** die Vorrichtung ferner umfasst:
ein erstes Bestimmungsmodul (116), das konfiguriert ist, um zu bestimmen, ob die Audioinformationen spezifische Audioinformationen umfassen, die mit einer voreingestellten Steueranweisung übereinstimmen oder nicht, wobei die voreingestellte Steueranweisung mindestens eine von einer ersten voreingestellten Steueranweisung und einer zweiten voreingestellten Steueranweisung umfasst, wobei die erste voreingestellte Steueranweisung konfiguriert ist, um einen Arbeitszustand des Bildaufnahmeelements (001) oder des Audioaufnahmeelements (04) zu steuern, und die zweite voreingestellte Steueranweisung konfiguriert ist, um einen Übertragungszustand der Videoinformationen zu steuern, und
ein erstes Anweisungsausführungsmodul (117), das konfiguriert ist, um, wenn die Audioinformationen die spezifischen Audioinformationen umfassen, die voreingestellte Steueranweisung auszuführen,
wobei das Synthesemodul (112) ferner konfiguriert ist, die Videoinformationen aus den Bildinformationen und den Audioinformationen mit Ausnahme der spezifischen Audioinformationen zu synthetisieren.

8. Vorrichtung nach Anspruch 7, ferner umfassend:
ein erstes Herstellungsmodul (118), das konfiguriert ist, um eine Kommunikationsverbindung mit einer am Körper tragbaren Vorrichtung (05) herzustellen, wobei die am Körper tragbare Vorrichtung (05) eine Anzeigefunktion aufweist, und
ein erstes Sende-Empfängermodul (119), das konfiguriert ist, um von dem Videowiedergabe-Endgerät (03) gesendete Informationen zu empfangen und die Informationen an die am Körper tragbare Vorrichtung (05) zu senden, damit die am Körper tragbare Vorrichtung (05) die Informationen anzeigt.

9. Verfahren nach einem der Ansprüche 7 bis 8, ferner umfassend:
ein zweites Herstellungsmodul (120), das konfiguriert ist, um eine Kommunikationsverbindung mit der am Körper tragbaren Vorrichtung (05) herzustellen, wobei eine vorgegebene Anzahl von Steuertasten an der am Körper tragbaren Vorrichtung (05) angeordnet ist und verschiedene Operationen über dieselbe Taste in der vorgegebenen Anzahl von Steuertasten, die unterschiedlichen voreingestellten Steueranweisungen entsprechen, eingerichtet sind, wobei die voreingestellten Steueranweisungen mindestens eine von der ersten voreingestellten Steueranweisung und der zweiten voreingestellten Steueranweisung umfassen, wobei die erste voreingestellte Steueranweisung konfiguriert ist, um den Arbeitszustand des Bildaufnahmeelements (001) oder des Audioaufnahmeelements (04) zu steuern, und die zweite voreingestellte Steueranweisung konfiguriert ist, um den Übertragungszustand der Videoinformationen zu steuern, und
ein zweites Anweisungsausführungsmodul (121), das konfiguriert ist, um, wenn eine Zieloperation über eine Zieltaste in der vorgegebenen Anzahl von Steuertasten erfasst wird, eine Steueranweisung auszuführen, die der Zieloperation über die Zieltaste entspricht.

10. Computerprogramm, das Anweisungen zum Ausführen der Schritte des Live-Video-Rundfunkverfahrens nach einem der Ansprüche 1 bis 6 umfasst, wenn das Programm durch einen Computer ausgeführt wird.

11. Aufzeichnungsmedium, das von einem Computer lesbar ist und ein darauf aufgezeichnetes Computerprogramm aufweist, das Anweisungen zum Ausführen der Schritte des Live-Video-Rundfunkverfahrens nach einem der Ansprüche 1 bis 6 umfasst.

## Revendications

1. Procédé de diffusion de vidéo en direct, dans lequel le procédé est appliqué à un terminal mobile (02) et comprend :
une étape consistant à recevoir (S21) des informations d'image envoyées par des lunettes intelligentes (01), dans lequel les informations d'image sont acquises par un élément d'acquisition d'image (001) agencé sur les lunettes intelligentes (01) ;
une étape consistant à recevoir des informations audio en provenance des lunettes intelligentes (01), dans lequel les informations audio sont acquises par l'élément d'acquisition d'informations audio (04) connecté aux lunettes intelligentes (01) ; ou une étape consistant à acquérir directement les informations audio acquises par le terminal mobile (02) ;
une étape consistant à synthétiser (S22) des informations vidéo selon les informations audio et les informations d'image ;
une étape consistant à envoyer (S23) les informations vidéo à un terminal de lecture vidéo (03) ;
**caractérisé en ce que** le procédé comprend en outre :
une étape consistant à déterminer (S31) si les informations audio comprennent des informations audio spécifiques mises en correspondance ou non avec une instruction de commande prédéfinie, dans lequel l'instruction de commande prédéfinie comprend au moins une instruction parmi une première instruction de commande prédéfinie et une seconde instruction de commande prédéfinie, dans lequel la première instruction de commande prédéfinie est configurée de manière à commander un état de fonctionnement de l'élément d'acquisition d'image (001) ou de l'élément d'acquisition d'informations audio (04), et la seconde instruction de commande prédéfinie est configurée de manière à commander un état de transmission des informations vidéo ; et
dans le cas où les informations audio comprennent les informations audio spécifiques, une étape consistant à exécuter (S32) l'instruction de commande prédéfinie ;
dans lequel l'étape de synthèse (S22) consiste à synthétiser les informations vidéo à partir des informations d'image et des informations audio, à l'exception desdites informations audio spécifiques.

2. Procédé selon la revendication 1, comprenant en outre les étapes ci-dessous consistant à :
établir (S51) une connexion de communication avec un équipement portatif (05), l'équipement portatif (05) présentant une fonction d'affichage ; et
recevoir (S52) des informations envoyées par le terminal de lecture vidéo (03) ; et
envoyer les informations à l'équipement portatif (05) afin que l'équipement portatif (05) affiche les informations.

3. Procédé selon l'une quelconque des revendications 1 à 2, comprenant en outre les étapes ci-dessous consistant à :
établir (S61) une connexion de communication avec l'équipement portatif (05), dans lequel un nombre prédéfini de touches de commande est agencé sur l'équipement portatif (05) et dans lequel différentes opérations sur la même touche parmi le nombre prédéfini de touches de commande correspondent à différentes instructions de commande prédéfinies, dans lequel les instructions de commande prédéfinies comprennent au moins l'une parmi la première instruction de commande prédéfinie et la seconde instruction de commande prédéfinie, dans lequel la première instruction de commande prédéfinie est configurée de manière à commander l'état de fonctionnement de l'élément d'acquisition d'image (001) ou l'élément d'acquisition d'informations audio (04), et la seconde instruction de commande prédéfinie est configurée de manière à commander l'état de transmission des informations vidéo ; et
dans le cas de la détection d'une opération cible sur une touche cible parmi le nombre prédéfini de touches de commande, exécuter (S62) une instruction de commande correspondant à l'opération cible sur la touche cible.

4. Procédé selon l'une quelconque des revendications 1 à 3, comprenant en outre les étapes ci-dessous consistant à :
établir (S81) une connexion de communication avec un casque d'écoute (06) ; et
recevoir (S82) des informations envoyées par le terminal de lecture vidéo (03), et envoyer des informations vocales correspondant aux informations, au casque d'écoute (06), afin que le casque d'écoute (06) fournisse en sortie les informations vocales.

5. Procédé selon la revendication 4, comprenant en outre les étapes ci-dessous consistant à :
établir (S91) une connexion de communication avec un équipement portatif (05), dans lequel un nombre prédéfini de touches de commande est agencé sur l'équipement portatif (05), et dans lequel différentes opérations sur la même touche parmi le nombre prédéfini de touches de commande correspondent à différentes instructions de commande prédéfinies, dans lequel les instructions de commande prédéfinies sont configurées de manière à commander un état de transmission des informations vocales ; et
dans le cas de la détection d'une opération cible sur une touche cible parmi le nombre prédéfini de touches de commande, exécuter (S92) une instruction de commande correspondant à l'opération cible sur la touche cible.

6. Procédé selon la revendication 4, dans lequel, suite à l'étape de réception (S82) des informations envoyées par le terminal de lecture vidéo (03), le procédé comprend en outre les étapes ci-dessous consistant à :
déterminer (S103) si les informations audio comprennent des informations audio spécifiques mises en correspondance ou non avec une instruction de commande prédéfinie, dans lequel l'instruction de commande prédéfinie est configurée de manière à commander l'état de transmission des informations vocales ; et
dans le cas où les informations audio comprennent les informations audio spécifiques, exécuter (S104) l'instruction de commande prédéfinie.

7. Dispositif de diffusion de vidéo en direct, dans lequel le dispositif est configuré dans un terminal mobile (02) et comprend :
un premier module de réception (111), configuré de manière à recevoir des informations d'image envoyées par des lunettes intelligentes (01), les informations d'image étant acquises par un élément d'acquisition d'image (001) agencé sur les lunettes intelligentes (01) ;
un second module de réception (114) configuré de manière à recevoir des informations audio envoyées par les lunettes intelligentes (01), les informations audio étant acquises par un élément d'acquisition d'informations audio (04) connecté aux lunettes intelligentes (01) ; et/ou un module d'acquisition (115) configuré de manière à acquérir les informations audio acquises par le terminal mobile (02) ;
un module de synthèse (112), configuré de manière à synthétiser des informations vidéo selon les informations audio et les informations d'image ;
un premier module d'envoi (113), configuré de manière à envoyer les informations vidéo à un terminal de lecture vidéo (03) ;
**caractérisé en ce que** le dispositif comprend en outre :
un premier module de détermination (116), configuré de manière à déterminer si les informations audio comprennent des informations audio spécifiques mises en correspondance ou non avec une instruction de commande prédéfinie, l'instruction de commande prédéfinie comprenant au moins une instruction parmi une première instruction de commande prédéfinie et une seconde instruction de commande prédéfinie, dans lequel la première instruction de commande prédéfinie est configurée de manière à commander un état de fonctionnement de l'élément d'acquisition d'image (001) ou de l'élément d'acquisition d'informations audio (04), et la seconde instruction de commande prédéfinie est configurée de manière à commander un état de transmission des informations vidéo ; et
un premier module d'exécution d'instruction (117), configuré de manière à, lorsque les informations audio comprennent les informations audio spécifiques, exécuter l'instruction de commande prédéfinie ;
dans lequel le module de synthèse (112) est en outre configuré de manière à synthétiser les informations vidéo à partir des informations d'image et des informations audio, à l'exception des informations audio spécifiques.

8. Dispositif selon la revendication 7, comprenant en outre :
un premier module d'établissement (118), configuré de manière à établir une connexion de communication avec un équipement portatif (05), l'équipement portatif (05) présentant une fonction d'affichage ; et
un premier module d'émetteur-récepteur (119), configuré de manière à recevoir des informations envoyées par le terminal de lecture vidéo (03), et à envoyer les informations à l'équipement portatif (05) afin que l'équipement portatif (05) affiche les informations.

9. Dispositif selon l'une quelconque des revendications 7 à 8, comprenant en outre :
un second module d'établissement (120), configuré de manière à établir une connexion de communication avec l'équipement portatif (05), dans lequel un nombre prédéfini de touches de commande est agencé sur l'équipement portatif (05) et dans lequel différentes opérations sur la même touche parmi le nombre prédéfini de touches de commande correspondent à différentes instructions de commande prédéfinies, dans lequel les instructions de commande prédéfinies comprennent au moins l'une parmi la première instruction de commande prédéfinie et la seconde instruction de commande prédéfinie, dans lequel la première instruction de commande prédéfinie est configurée de manière à commander l'état de fonctionnement de l'élément d'acquisition d'image (001) ou l'élément d'acquisition d'informations audio (04), et dans lequel la seconde instruction de commande prédéfinie est configurée de manière à commander l'état de transmission des informations vidéo ;
un second module d'exécution d'instruction (121), configuré de manière à, lorsqu'une opération cible sur une touche cible parmi le nombre prédéfini de touches de commande est détectée, exécuter une instruction de commande correspondant à l'opération cible sur la touche cible.

10. Programme informatique incluant des instructions pour exécuter les étapes du procédé de diffusion de vidéo en direct selon l'une quelconque des revendications 1 à 6, lorsque ledit programme est exécuté par un ordinateur.

11. Support d'enregistrement lisible par un ordinateur et sur lequel est enregistré un programme informatique incluant des instructions pour exécuter les étapes du procédé de diffusion de vidéo en direct selon l'une quelconque des revendications 1 à 6.
